(19) 〔Europäisches Patentamt / European Patent Office / Office européen des brevets〕

(11) **EP 4 607 451 B1**

(12) **EUROPEAN PATENT SPECIFICATION**

(45) Date of publication and mention
of the grant of the patent:
**01.04.2026  Bulletin 2026/14**

(21) Application number: **24158833.4**

(22) Date of filing: **21.02.2024**

(51) International Patent Classification (IPC):
**G06T 5/70** *(2024.01)*        **G06T 5/20** *(2006.01)*

(52) Cooperative Patent Classification (CPC):
**G06T 5/70; G06T 5/20; G06T 5/60;**
G06T 2207/10072; G06T 2207/20036;
G06T 2207/20048; G06T 2207/20084;
G06T 2207/30004

(54) **SYSTEM AND METHOD FOR PROCESSING A MULTI-DIMENSIONAL DATA OBJECT OBTAINED BY A METROLOGICAL INVESTIGATION**

SYSTEM UND VERFAHREN ZUR VERARBEITUNG EINES DURCH EINE MESSTECHNISCHE UNTERSUCHUNG ERHALTENEN MEHRDIMENSIONALEN DATENOBJEKTS

SYSTÈME ET PROCÉDÉ DE TRAITEMENT D'UN OBJET DE DONNÉES MULTIDIMENSIONNEL OBTENU PAR UNE INVESTIGATION MÉTROLOGIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**27.08.2025  Bulletin 2025/35**

(73) Proprietor: **Bruker Biospin GmbH & Co. KG**
**76275 Ettlingen (DE)**

(72) Inventors:
• **Herbst, Michael**
 **76275 Ettlingen (DE)**

• **Haas, Martin**
 **76275 Ettlingen (DE)**

(74) Representative: **Fleuchaus & Gallo Partnerschaft mbB**
**Steinerstraße 15/A**
**81369 München (DE)**

(56) References cited:
**US-A- 5 473 655**        **US-A1- 2011 268 328**
**US-B2- 11 234 666**

## Description

## Technical Field

The present invention generally relates to electronic data processing, and more particularly, relates to computer-implemented methods, computer program products and systems for processing an n-dimensional data object obtained by a metrological investigation with appropriate filter functions.

## Background

Multidimensional data objects obtained by a metrological investigation are often processed to improve the quality of the data object. For example, a three-dimensional image obtained by a three-dimensional imaging method from a respective sample typically includes some noise which advantageously is to be filtered out. Higher n-dimensional data objects with n>3 can also be generated by a metrological investigation. For example, an additional dimension can be the time. For example, a 3D-image of a beating heart may be recorded over time. In this case, the time becomes the fourth dimension of a 4-dimensional data object with each 3D-image being associated with a respective time stamp. Another example for providing higher n-dimensional data objects is 4D NMR spectroscopy. In 4D NMR spectroscopy, there is as plurality of pulses, as the experiment is repeated, and the pulse timings are systematically varied and the oscillations of the spin system are probed point by point in the time domain.

A prior art approach for filtering such n-dimensional data objects implements the filtering with n-dimensional filters which is very costly in terms of memory consumption and processor load. An example of multi-dimensional filtering is described in "Seven ways to improve example-based single image super resolution", Timofte et al., 2015, arXiv:1511.02228v1. This paper presents the following techniques to improve example-based single image super resolution (SR): 1) augmentation of data, 2) use of large dictionaries with efficient search structures, 3) cascading, 4) image self-similarities, 5) back projection refinement, 6) enhanced prediction by consistency check, and 7) context reasoning. For example, a 3D data object typically contains 32 to 128 2D partitions which increases the memory consumption for filtering 3D data objects by this factor compared to filtering 2D partitions. The size of the 3D object should not fall below a meaningful threshold of the data object to be filtered. This threshold is in the order of 32 2D partitions. For 3D filtering, additional data needs to be added in the edge portions of the 3D data object which further increases memory consumption. With a typical bit size of 32 or 64, GPUs with less than 32 GB memory are not able to perform filtering with such n-dimensional filters.

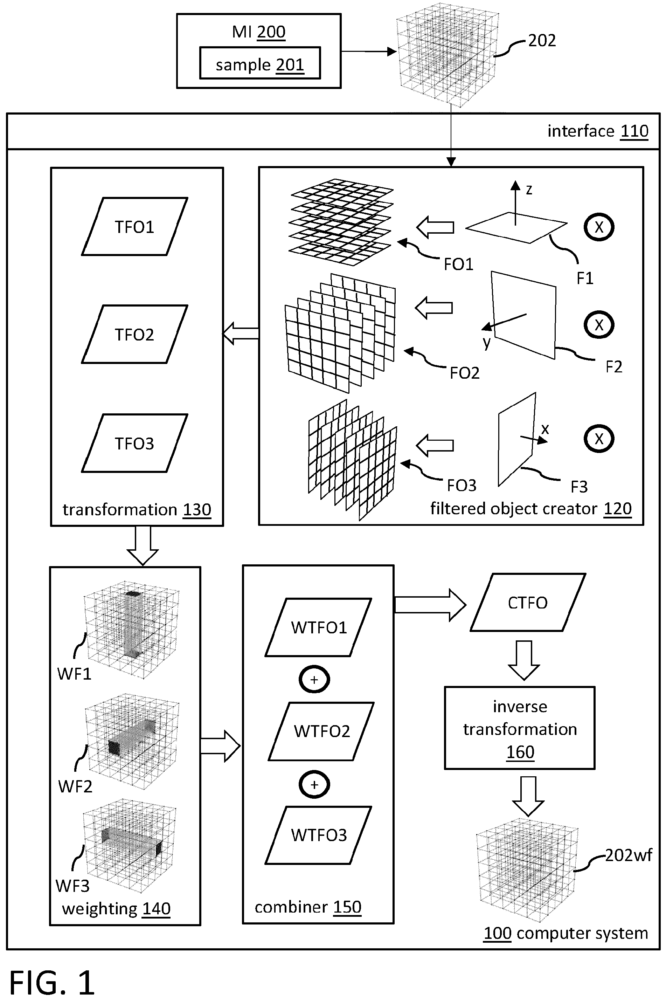

Another prior art approach uses lower-dimensional filters to filter the n-dimensional data object. However, in this implementation, information of higher dimensions is not used and lost resulting in significantly lower quality of the filtered data object compared to multi-dimensional filtering. An example of lower-dimensional filtering (i.e., the dimensionality of the filter is lower than the dimensionality of the data object) is described in "Dose reduction and image enhancement in micro-CT using deep learning", Muller et al., 2023, DOI: 10.1002/mp.16385. This paper describes a method used in micro-computed tomography (CT) to acquire high resolution anatomical images of rodents. The example in Fig. 1(a) of Muller illustrates 2D-Net1 as a 2D neural network for filtering for a 3D data object. This filtering algorithm only takes into account two neighboring data layers of the 3D object and fully filters only in two dimensions of the data object. The other dimension of the 3D data object is not taken into account in its full extent when filtering the 3D data object. A similar concept is proposed in US patent application US5473655 (A), where multiple layers of a three-dimensional image are filtered along a fixed axis in two dimensions. However, the fixed dimension is not considered for filtering.

## Summary

There is therefore a need for improved data processing of multi-dimensional data objects with filtering functions that achieve high-quality filtering of the multi-dimensional data object in all dimensions of the data object while, at the same time, keeping memory consumption and processor load at levels significantly (at least more than one order of magnitude) below the levels required for multi-dimensional filtering with filters having the same dimensionality as the multi-dimensional data object. Order of magnitude is used herein in the meaning of the following Merriam-Webster Dictionary definition: a range of magnitude extending from some value to ten times that value.

For example, when comparing the herein disclosed approach with the 3D filtering prior art approach also disclosed in Muller et al. on page 4, the processing of an entire multi-dimensional data object at once using this 3D filtering method requires memory resources at a factor of approximately 500 higher than when using the herein disclosed approach. When comparing it to the above mentioned 2D filtering method of Muller, the herein disclosed approach performs lower-dimensional filtering independently in all dimensions of the data object. With regard to the 3D data object of Muller, the herein disclosed approach performs filtering in all three dimensions taking into account all layers of the data object in each dimension. In other words, although only lower dimensional filters are used, the information of all dimensions is used when generating a weighted-filtered n-dimensional data object from the original n-dimensional data object. This finally leads to balanced denoising in all dimensions.

This technical problem is solved by features of the independent claims implementing a computer-implemented method, a computer program product and a computer system for processing an n-dimensional data object of a metrological investigation. In the computer-implemented method embodiment, the n-dimensional data object is received from a data source providing the n-dimensional data object as measurement result obtained by the metrological investigation. Typically, the data object has at least three dimensions. For example, the data object may originate from any of the following metrological investigations: magnetic resonance imaging, magnetic resonance spectroscopy, computed tomography, positron emission tomography or optical imaging. These metrological investigation examples all generate 3D images. However, the n-dimensional data object may comprise further dimensions, such as additional dimensions for the spatial direction, the time, a diffusion direction, a spectroscopic dimension (i.e., a direction in the multidimensional data object along which different frequencies of a respective sample are quantified), etc.

Then, k filtered objects are calculated by filtering the n-dimensional data object with k filter functions. Thereby, each filter function has a dimensionality $dF$ with $dF < n$. In other words, the filter functions have a lower dimensionality than the data object. For example, in case of a three-dimensional image data object in the (x, y, z)-space, the filter functions can be two-dimensional kernel functions in the space of the data object. In general, a kernel filter is a type of kernel-based smoothing method which is often applied to an input vector, time series or matrix to generate the smoothed version of the input sequence. A specific type of kernel can be used for a smoothing process. The smoothing process involves computation of a convolution between the input sequence and the kernel. Thereby, each filter function misses at least one of the n dimensions of the data object such that none of the n dimensions of the data object is missing in all filter functions. Advantageously, the filtering of the data object results in denoising of the data object.

For the three-dimensional image data object example this implies that there are two or three two-dimensional filter functions. For example, for three two-dimensional filter functions, the first filter function may be a 2D kernel in the x-y-plane, the second filter function may be a 2D kernel in the x-z-plane, and the third filter function may be a 2D kernel in the y-z-plane. In principle, further 2D filter functions can be defined for the x-y plane, such as functions in the y-x-plane or the -x-y-plane. But these functions are not relevant for the herein disclosed approach because the missing dimension for these three functions is always the z-dimension. The lower-dimensional filter functions are applied to layers of the data object along the corresponding missing dimension. In the 3D image example, the 2D kernel filter function in the x-y-plane is independently applied to each x-y layer of the 3D image along the z-dimension. Similarly, the other kernel functions are independently applied to the respective layers along the x- and y-dimensions. As a result of the filtering, for the 3D image, three filtered objects are generated by applying the three 2D-filter functions to the 3D image, wherein each of the filtered objects includes a plurality of filtered layers in parallel to the plane of the respective filter function. Using lower dimensional filter functions significantly reduces the memory consumption and CPU/GPU load of the filtering calculation compared to filter functions having the dimensionality of the data object. Applying a 3D-filter function would consume significantly more computing resources than the 2D-filter functions. However, using lower-dimensional filter functions typically results in artefacts in the filtered objects. This effect is due to the use of lower-dimensional filter functions which are not able to remove noise from the data object in the respective missing dimension(s). Typically, any n-dimensional data object obtained by a metrological investigation includes some noise which is caused by respective measurement methods. In the example of a 3D-image, such artefacts are visible as lines or stripe-like artefacts in the direction of the respective missing dimension(s), that is the dimension(s) in which no filtering occurred.

The following steps of the computer-implemented method allow to significantly reduce such artefacts so that a high-quality weighted-filtered n-dimensional data object is obtained when applying the method.

The k filtered objects are then transformed by an invertible integral transformation (i.e., an integral transform for which an inverse transform exists) from the data object space into k transformed filtered objects in a transformation space. The invertible integral transformation (sometimes also referred to as "invertible transformation", "inverse integral transformation" or "invertibility of integral transform") may be a Fourier transform, a wavelet transform or a cosine transform. For example, when using a Fourier transform, the transformation space is the Fourier space. In the transformation space, the artefacts can be localized dependent on the missing dimension(s). Thereby, transformation into the transformation space, in which the artefacts have different localizations, allows to make use of data redundancies to reduce or even suppress the artefacts in their respective localizations.

Then, k weight functions are applied to the k transformed filtered objects, respectively, for point-wise weighting of the data points of the transformed filtered objects resulting in k weighted transformed filtered objects. The point-wise weighting allows to reduce (attenuate) the artefacts created by the calculating (filtering) step. Thereby, the weight functions are configured such that data points in the transformed filtered objects which belong to sections of the transformation space that contain artefacts are underweighted compared to data points which are in sections of the transformation space that are free of artefacts. In other words, data points in artefact-containing sections are weighted with lower weight than data points in artefact-free sections. Thereby, there must not be any data point in the transformation space where all weight functions are 0. In other words, the sum of all weight function values for any data point is always greater than 0. In one implementation, each weight function may have only values smaller than or equal to 1 and greater than 0. In another implementation, each weight function may have only two values greater than 0.

Weight functions may be represented by a neural network which has been trained by providing n-dimensional data objects as output data and generating n-dimensional data objects as input data from the output data by simulating the artefacts to be removed by the filtering, and then filtering them with the k filter functions. In other words, there are n-dimensional clean, noise-free data objects (CDO) without artefacts, and a set of k lower-dimensional filters designed to remove such noise, e.g., Gaussian noise. These CDO are used as output data. Noise data objects (NDO) are generated by adding noise to the CDO. These NDO are filtered by the set of filters, generating ADO (data objects with residual artefacts resulting from the lower dimensionality of the filters compared to the NDO). The neural network is trained with the ADO as an input and CDO as an output. Alternatively, the neural network is trained with the transformed ADO as an input and the transformed CDO as an output. Alternatively, the neural network is trained to provide a n-dimensional weighting function with the transformed input data objects as an input and output data objects as an output. In this alternative implementation, weight functions are generated by a neural network.

In one embodiment, the filter functions are (n-1)-dimensional, wherein the invertible integral transformation is a Fourier transform or a cosine transform and the weight functions applied to the transformed filtered objects each extend along the direction corresponding to the dimension missing in the previously applied filter functions. Thereby, each weight function has a minimum along a direction R corresponding to a missing dimension in relation to values present transversely to the direction R. For example, 2D filter functions may be applied to a 3D data object. The invertible integral transformation can be a Fourier transform or a cosine transform and the weight functions applied to the transformed filtered objects each extend along the direction corresponding to the dimension missing in the previously applied 2D filter functions. Thereby, each weight function has a minimum along the direction corresponding to the missing dimension in relation to values present transversely to said direction. In case the invertible integral transformation is a Fourier transform, each weight function has a rotational symmetry along said direction.

In one embodiment, each weight function is mirror symmetrical in a plane perpendicular to said direction. The k weight functions can be identical except for a change of coordinates and direction dependent compression or extension factors. In other words, if the size or number of data points- of the transformed filtered objects varies in respective dimensions (i.e., different expansion in the respective directions), the weight function needs to be adjusted accordingly. That is, the k weight functions may vary by rotation and compression/-stretching factors in the transformation space. In one implementation, the k weight functions can be inverse Gaussian functions with an offset such that all values are greater than zero.

In one embodiment, each weight function can be determined from transformed filtered objects. In a first step, k-1 difference objects are created by computing the differences between a particular transformed filtered object and the remaining k-1 transformed filtered objects. Then, the difference objects are smoothed (e.g., by convolution with a Gaussian function over a range of 3-15 data points or fitting with an analytical function). Threshold filtering is applied to the k-1 smoothened difference objects by replacing negative values by 0. The filtered k-1 difference objects are then combined into a combined difference object by a point-wise maximum value formation. Finally, the combined difference object is inverted.

In one implementation, a morphological operation may be applied to the data points of the difference objects. A person skilled in the art is familiar with the basic morphological operators (operations) erosion, dilation, opening and closing as described for example in Image Analysis and Mathematical Morphology by Jean Serra, ISBN 0-12-637240-3 (1982) or Image Analysis and Mathematical Morphology, Volume 2: Theoretical Advances by Jean Serra, ISBN 0-12-637241-1 (1988).

The k weighted transformed filtered objects are then combined into a combined transformed filtered object wherein each data point of the combined transformed filtered object is normalized with the sum of the respective weight functions at each point. That is, the combination of the weighted transformed filtered objects includes adding the various weighted transformed filtered objects and normalizing the added values such that the combined transformed filtered object has values which are of the same order of magnitude as the values of the weighted transformed filtered objects.

The combined filtered object is then transformed back into the n-dimensional object space by applying the inverse of the invertible integral transformation to the combined filtered object. The resulting n-dimensional data object corresponds to a weighted-filtered data object which is improved in quality versus the original data object obtained from the metrological investigation.

By using lower-dimensional filters with the herein disclosed steps for reducing the impact of artefacts caused by such lower-dimensional filters, a high-quality filtering method is provided which can be executed on any computing device (e.g., a standard personal computer) because memory consumption and CPU/GPU load are significantly lower compared to methods using filters with the same dimension as the data object.

A further embodiment is a computer program product for processing an n-dimensional data object of a metrological investigation. The program, when loaded into a memory of a computing device and executed by at least one processor of the computing device, causes the at least one processor to execute the steps of the computer-implemented method as claimed herein.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

## Short description of the figures

FIG. 1 shows a block diagram of a computer system for processing an n-dimensional data object obtained by a metrological investigation, according to an embodiment;

FIG. 2 is a simplified flowchart of a computer-implemented method for processing such n-dimensional data object according to an embodiment;

FIG. 3 is a simplified flowchart with sub-steps of an optional step of said method for automatically determining weight functions according to an embodiment;

FIG. 4A illustrates an example of two transformed filtered object layers for two dimensions;

FIG. 4B illustrates an example of a difference object derived from two transformed filtered object layers;

FIG. 5A illustrates an example for determining a weight function from transformed filtered objects;

FIG. 5B illustrates an example using morphological operations to determine a weight function from a difference object;

FIG. 5C illustrates filtering results for a three-dimensional data object for two different types of weightings with three different weighting values each;

FIG. 6 shows examples of lower dimensional filtering results without using weight functions;

FIGs. 6A to 6I illustrate filter results for an example 3D image showing the head of a mouse with each figure using a different weight function;

FIGs. 7A, 7B illustrate example embodiments where weight functions may be represented or generated by a neural network; and

FIG. 8 is a diagram that shows an example of a generic computer device and a generic mobile computer device, which may be used with the techniques described herein.

## Detailed description

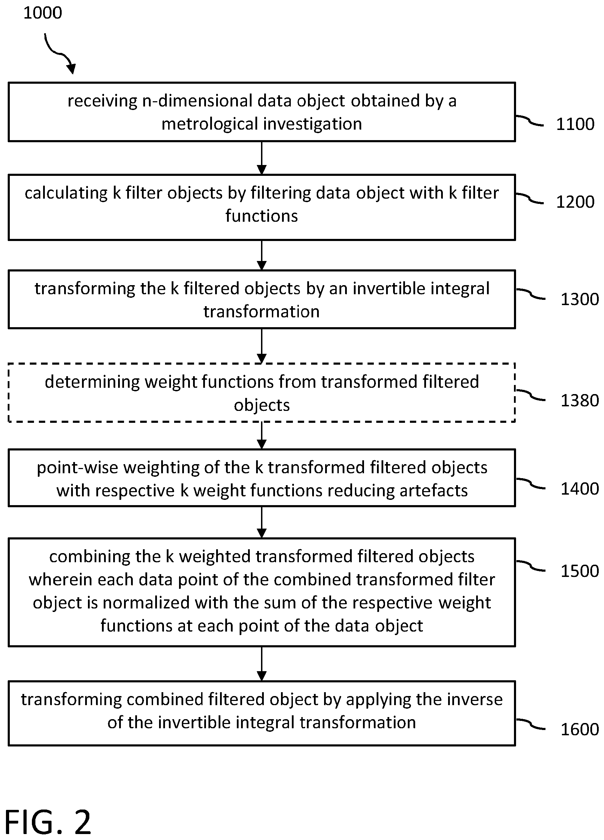

FIG. 1 shows a block diagram of an example embodiment of a computer system 100 for processing an n-dimensional data object 202 obtained by a metrological investigation. FIG. 2 is a simplified flowchart illustrating an embodiment of a computer-implemented method 1000 for processing such n-dimensional data object 202. The method 1000 may be executed by the computer system 1000 when loading a corresponding computer program into a memory of said system and processing the program with one or more processors of the system. FIG. 1 will be described in the context of FIG. 2. Therefore, the following description refers to reference numbers of FIG. 1 and FIG. 2.

The computer system 100 is communicatively coupled via interface 110 to a data source 200 to receive 1100 the n-dimensional data object 202 as a result of a metrological investigation MI of a particular sample 201. For example, the data object 202 can be obtained by Positron-Emission-Tomography (PET), Computer-Tomography (CT), MR-Imaging (MRI), or the like. However, the metrological investigation is not limited to imaging methods (e.g., 4D NMR spectroscopy). In the example of FIG. 1, data object 202 is a 3D cube (e.g., the three dimensions of a 3D image with corresponding voxels as data points). However, additional dimensions may be part of n-dimensional data object 202, such as for example, the time, a diffusion direction, a dimension representing multiple data receivers, a spectroscopic dimension, etc. The 3D example will be used throughout the description of FIG. 1. However, a person skilled in the art is able to transfer the underlying concept to data objects having more than three dimensions.

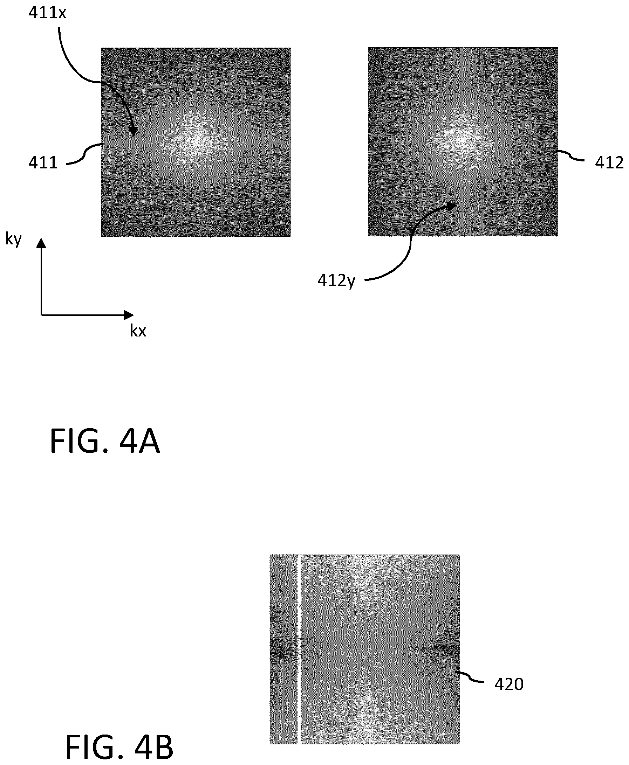

A filtered object creator module 120 of system 100 is adapted to calculate (step 1200) k filtered objects FO1 to FO3 by filtering the n-dimensional data object 202 with k filter functions F1 to F3. Thereby, each filter function has a dimension dF with dF< n. Each filter function F1, F2, F3, in the space of the data object 202, is missing at least one of the n dimensions x, y, z of the data object such that none of the n dimensions of the data object is missing in all filter functions. For example, for a 3D object, a filter function may be a 2D filter or a 1D filter. For a 4D object, a filter function can be one-dimensional, two-dimensional or three-dimensional, and so on. In the example, the filtered object FO1 is obtained by applying the 2D filter function F1 (e.g., a 2D kernel function) to each x-y layer of the data object 202 (i.e., the data points of the data object in layers that are parallel to the x-y plane). The result is a stack of filtered x-y layers which are stacked on top of each other in the z-direction. For FO1, no filtering is performed in z-direction leading to artefacts in the filtered object. As explained in more detail in the context of FIG. 4A, such artefacts can easily be localized in a transformation space (e.g., K-space). The filtered object FO2 is obtained in the same manner but with the x-z layers of data object 202 being filtered with the filter function F2 in the x-z plane. The filtered layers of FO2 are stacked on top of each other in the y-direction. Finally, the filtered object FO3 is obtained in the same manner but with the y-z layers of data object 202 being filtered with the filter function F3 in the y-z plane. The filtered layers of FO3 are stacked on top of each other in the x-direction. For higher dimensional data objects, filters for combinations sub-dimensions will lead to more complex filtered objects. For example, when adding a time dimension to data object 202, a 2D filter function complying with the above constraints for filter functions can include the same filter functions as in the 3D example. In addition, a filter function may be defined in the x-time plane or the y-time plane, and so on. 3D filter functions can also be used - for example, a filter function in the 3D x-y-z "plane" with the filtered 3D-"layers" (volumes) being stacked on top of each other in the time-direction, or filtered x-y-t volumes being stacked in the z-dimension, etc.

The k filtered objects FO1 to FO3 are then transformed 1300 by an invertible integral transformation 130 into k transformed filtered objects TFO1 to TFO3. For example, the invertible integral transformation may be a Fourier transformation, a wavelet transformation or a cosine transformation. For example, when using a Fourier transformation, the transformation space is the Fourier space (K-space). A person skilled in the art may use other transformations as long as the respective transformation space allows the localization of artefacts which are introduced into the filtered objects by the filtering.

Turning briefly to FIG. 4A, two layers (cross-sections) 411, 412 of transformed filtered objects (based on a 3D data object) are illustrated (after a Fourier transformation) in K-space. Transformed filtered layer 411 shows an artefact 411x which extends in the kx-direction. This results from a 2D filter function in the y-z plane which leads to such artefacts in the unfiltered x-direction. Transformed filtered layer 412 shows an artefact 412y which extends in the ky-direction. This results from a 2D filter function in the x-z plane which leads to such artefacts in the unfiltered y-direction.

The kx and ky axes of K-space correspond to the horizontal (x-) and vertical (y-) axes of the original 3D data object. The kx- and ky-axes, however, represent spatial frequencies in the x- and y-directions rather than positions. As known by a skilled person, the individual points (kx,ky) in K-space do not correspond one-to-one with individual data points (x,y) (e.g., pixels) in the image. Each K-space point contains spatial frequency and phase information about every pixel in the final image. Conversely, each pixel in the image maps to every point in K-space.

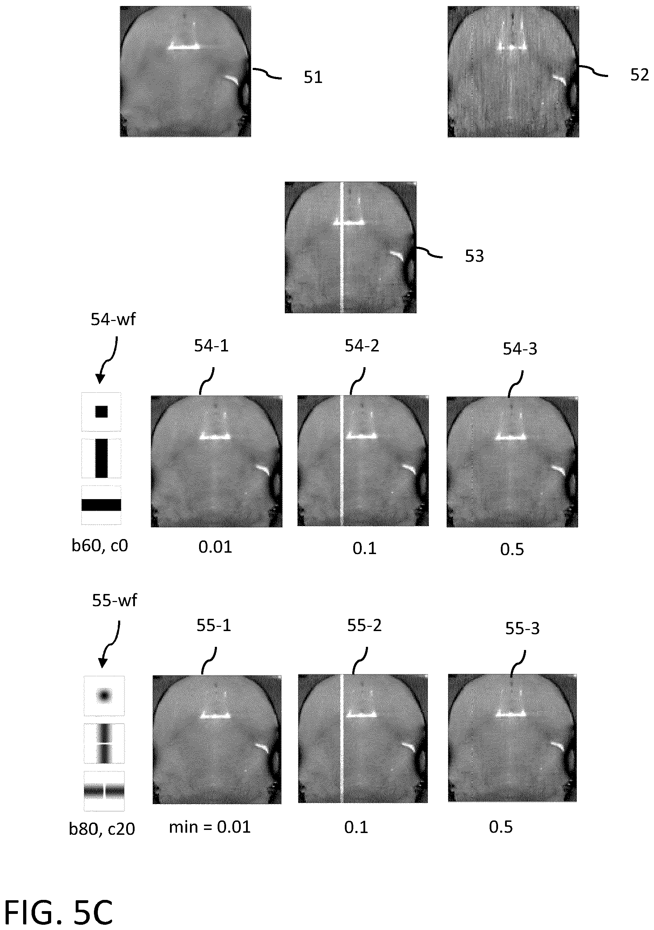

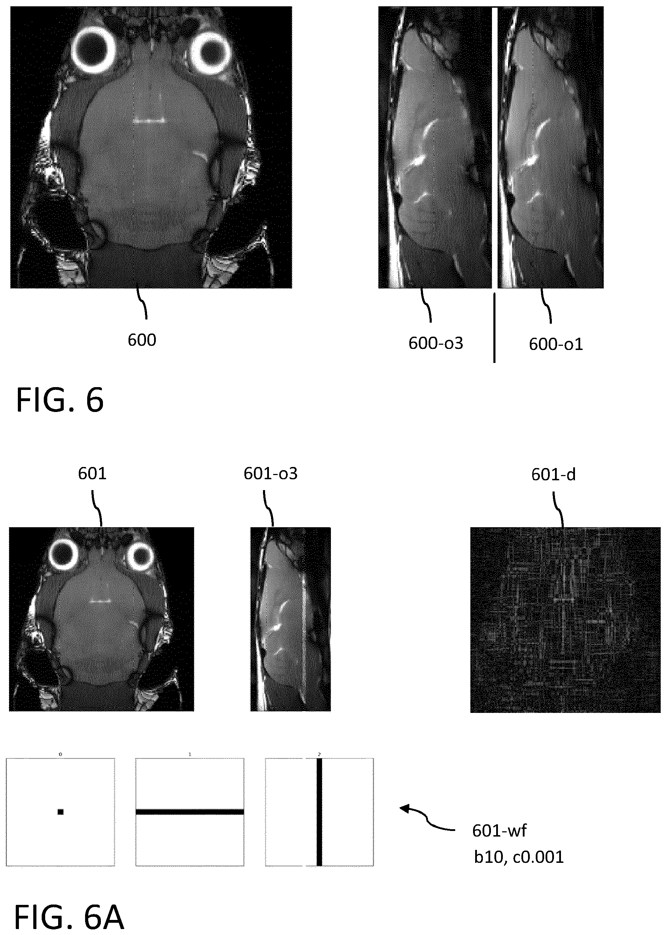

A weighting module 140 of system 100 performs data-point-wise weighting 1400 of the k transformed filtered objects TFO1 to TFO3 with respective k weight functions WF1 to WF3 to reduce artefacts from the calculating (filtering) step 1200 resulting in k weighted transformed filtered objects WTFO1 to WTFO3. In other words, each of the transformed filtered objects is weighted with a respective weight function. In the example, three weight functions WF1 to WF3 are illustrated in K-space. In each weight function, a grey shaded cuboid indicates K-space points with weight values smaller than 1 and greater than 0. All remaining points in the respective weight function have values of 1. When applying (multiplying) the weight functions to the respective transformed filtered objects, the values of the transformed filtered objects in the section of the respective cuboids are scaled down. As the cuboids are located such that they overlap with artefacts caused by the lower-dimensional filtering, the artefacts are reduced compared to the remaining points of the transformed filtered objects. For example, transformed filtered object TFO1 was filtered in the x-y plane. Therefore, the filtering artefacts appear as an artefact in the z-direction. Weight function WF1 with lower weight values in the cuboid in z direction (and centered in the x-y plane) is applied to TFO1 and reduces the respective artefacts by multiplying the section including the artefacts with lower weight values (<1) whereas the non-artefact sections are multiplied with a weight value of 1 (i.e., not changing the original values). The same mechanism is used when applying WF2 to TFO2 to reduce artefacts in the y-direction and when applying WF3 to TFO3 to reduce artefacts in the x-direction. The values of a weight function are advantageously greater than 0 and smaller than or equal to 1. In one implementation, each weight function may only include two different values greater than 0 (e.g., 0.1 and 1). Different implementations for weight functions with respective filtering results are discussed in more detail in FIG. 5C and FIGs. 6A to 6I.

A combiner module 150 then combines 1500 the k weighted transformed filtered objects WTFO1 to WTFO3 into a combined transformed filtered object CTFO. Thereby, each data point of the combined transformed filtered object is normalized with the sum of the respective weight functions at each point. In the example, when combining 1500 the weighted transformed filtered objects, the weighted values of WTFO1, WTFO2 and WTFO3 are added at each data point in K-space. The data values of the combined transformed filtered object CTFO result from adding the values of all three transformed filtered objects at each K-space data point. Assuming that a data point in the upper left corner of the transformed data objects TFO1 to TFO3 is weighted with 1 by each of the weight functions WF1 to WF3, the respective sum value in the combined CTFO is divided by 3 (normalization). Assuming that the weight values in the grey cuboids of the weight functions are 0.3, then a data point in the intersection of all three weight functions would be normalized by dividing the respective sum value in the combined CTFO by 0.9. Because of the normalization it must be guaranteed that at least one of the weight functions has a value greater than 0 at each data point in K-space to avoid a division by 0. Advantageously, all values of all weight functions are greater than 0.

Finally, system 100 transforms 1600 the combined filtered object TCFO by applying the inverse 160 of the invertible integral transformation into a weighted-filtered n-dimensional data object 202wf. This weighted-filtered data object 202wf includes only a low level of artefacts which result from using resource-saving lower-dimensional filtering while still taking into account the information of all dimensions of the n-dimensional data object 202.

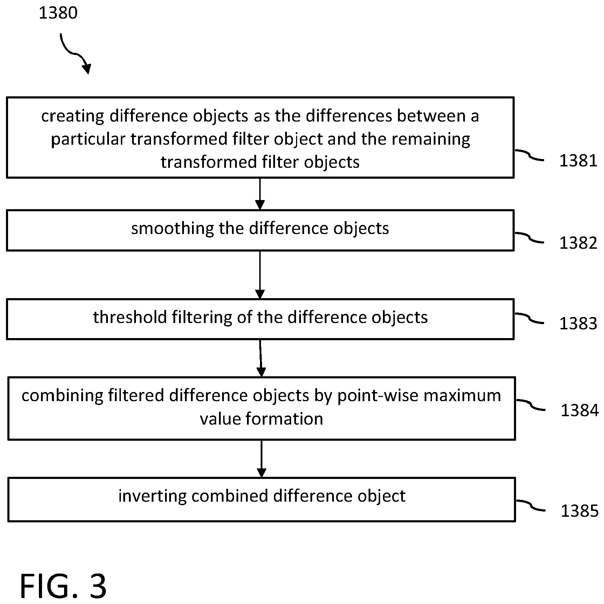

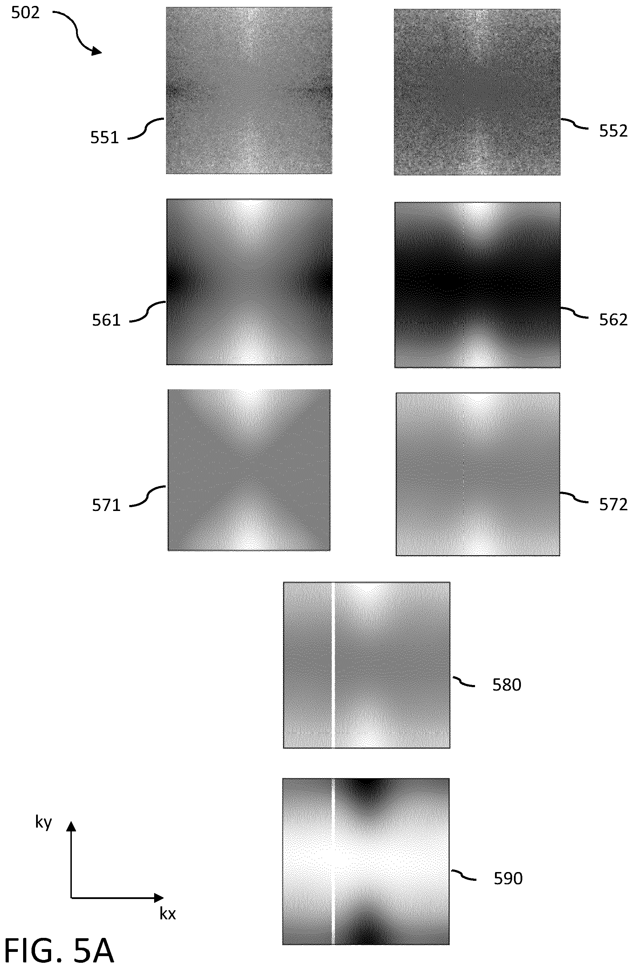

In one embodiment, the weighting module 140 of system 100 can also determine 1380 the weight functions from the transformed filtered objects. FIG. 3 shows the sub-steps of the optional determining step 1380 of FIG. 2 which are now described in view of the example shown in FIG. 5A.

Firstly, k-1 difference objects are created 1381 by forming the respective differences between a particular transformed filtered object and the remaining k-1 transformed filtered objects (e.g., the two differences TFO1-TFO2 and TFO1-TFO3). FIG. 4B shows an example of a difference object 420 which is the result of the difference between the transformed filtered object 412 and the transformed filtered object 411 of FIG. 4A.

FIG. 5A illustrates the development stages 502 in the automatic determining of a weight function by way of a particular example. Each stage is shown as an image row in FIG. 5A. The first row includes layers (cross-sections) of two difference objects 551, 552 which were created from respective transformed filtered objects. Each image shows the central x-y-layer of the respective difference object in its current processing stage.

The second row shows corresponding layers of smoothed difference objects 561, 562 which result from smoothing 1382 the corresponding transformed filtered objects 551, 552. For example, smoothing may be implemented by convolution with a Gaussian function over a range of 3-15 data points or fitting with an analytical function. A skilled person may use other well-known smoothing algorithms.

In the third row, threshold filtering 1383 was applied to the smoothed k-1 difference objects in that negative values are replaced by 0.

In the fourth row, the filtered k-1 difference objects 571, 572 are combined 1384 by a point-wise maximum value formation into a combined difference object 580. For the illustrated cross-section images 572 and 580 (FIG. 5A only illustrates cross-sections in the kx-ky plane) look equal because the values of image 572 are greater for all points in the cross-section than in image 571. This may be different in other cross-sections.

In the fifth (last) row, the combined difference object is pointwise inverted 1385 resulting in the determined weight function 590. Pointwise inverted in this context means pointwise inverse value formation. Large values in image 580 occur in areas with artefacts. To reduce/suppress these large values, the corresponding weight function values have to be small. In the example, the following pointwise inversion was applied to the data point values $v_p580$ of the combined difference object 580 to arrive at the data point values $v_p590$ of the corresponding weight function 590:

$$v_p590 = 1 - v_p580/v_{max}580$$

where a particular data point value $v_p580$ is normalized by dividing that value through the maximum value $v_{max}580$ of all data points of the combined difference object 580.

An alternative pointwise inversion is:

$$v_p590 = 1/v_p580$$

To avoid division by zero, zero values are replaced by small positive values.

For better visibility of the weight function (image 590) the grey scale values represent normalized values where black pixels represent the value '0' and white pixels represent the value '1'. For the other images in FIG. 5A, the value '0' is represented by a mid-grey value. Black pixels represent the respective negative maximum absolute value and white pixels the respective positive maximum absolute value.

The example of FIG. 5A illustrates the automatic determination of one layer of weight function 590 in K-space which is adapted to reduce artefacts of the transformed filtered object that served as minuend for the creation 1381 of the difference objects. When looking at the example of FIG. 1, WF1 can be determined from the difference objects TFO1-TFO2 and TFO1-TFO3. In more general, when generating a weight function for a particular transformed filtered object, step 1381 creates a plurality of difference objects with the particular transformed filtered object being the minuend in each respective subtraction of two transformed filtered objects.

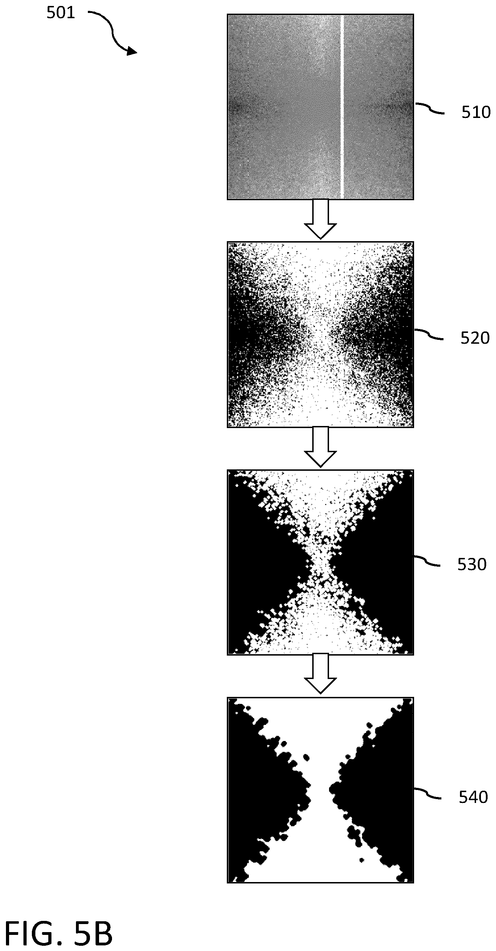

FIG. 5B illustrates an alternative to smoothing steps 561, 562 of FIG. 5A to automatically generate appropriate weight functions from respective transformed filtered objects by using morphological operations. In this alternative implementation, a difference object 510 is created from two transformed filtered objects. A threshold object 520 is generated by assigning all values of the difference object equal to or greater than a predefined threshold value to a predefined high-weight value (white pixels in object 520), and assigning all values of the difference object smaller than the predefined threshold value to a predefined low-weight value (black pixels). The object 530 shows the result after application of a morphological closing operation to threshold object 520. In the closing operation, high-weight values (white pixels) which are in section dominated by low-weight values (black pixels) are switched to low-weight values (black pixels). The object 540 shows the result after application of a morphological opening operation to object 530. In the opening operation, low-weight values (black pixels) which are in section dominated by high-weight values (white pixels) are switched to high-weight values (white pixels). Object 540 can then be processed in accordance with threshold filtering 571, 572, point-wise maximum value formation 580, and pointwise inversion 590 as described above.

FIG. 5C illustrates a filtering quality comparison for two different types of weight functions applied to a real 3D image obtained by magnetic resonance imaging. The 3D image shows a section of the head of a mouse. Image 51 is a layer of a filtered object which was obtained by applying a 2D filter function to the filtered object in the plane of image 51. Image 52 shows the same section of the mouse head in a filtered object which was filtered with a 2D filter function orthogonal to the plane of image 51. The dark stripe-like artefacts are caused by using the lower-dimensional orthogonal filter functions. Image 53 was generated by adding the filtered objects of all three dimensions and averaging the corresponding voxel values. That is, the added values for each voxel are divided by the number of filtered objects (e.g., divided by 3 in the case of the 3D image). It can be seen that the artefacts in image 53 are significantly reduced compared to image 52 but still significantly higher than in image 51. It is therefore desirable to further improve the quality of the filtering in all dimensions so that the final filtered 3D image has a quality similar to the quality of the 2D filtered image 51. In other words, the artefacts caused by filtering of the data object can be considered as noise and the weight functions are used for denoising the filtered 3D object.

The images 54-1 to 54-3 were generated by using the three weight functions 54-wf which correspond to the type of weight functions as shown in FIG. 1. The three schematic views of weight functions 54-wf (and of all other similar schematic views of weight functions herein) show cross-sections through the 3D filter function in each dimension. The shown cross-sections cut the weight functions in half with regard to the respective dimensions. For example, the lower view may be the cross-section cutting the weight function in half orthogonal to the y-dimension. The middle view may be the cross-section orthogonal to the x-dimension, and the upper view may be the cross-section orthogonal to the z-dimension. The width b60 of the black sections indicating the sections with low-weight values in the weight function is 60 pixels and the section is not interrupted (indicated by c0). For image 54-1, the weighting value in the black sections is set to 0.01 whereas the weighting value in the white sections is set to 1. Similarly, for image 54-2, the weighting value in the black sections is set to 0.1, and for image 54-3 to 0.5 The best improvement vs. the unweighted filtered image 53 is achieved with the weighting value 0.01 in image 54-1 although all three weighting values provide a similar level of quality which is still quite below the 2D filter quality shown in image 51.

The images 55-1 to 55-3 were generated by using the three weight functions 55-wf which differ from the weight functions 54-wf in that the width b80 of the low-weight sections is 80 pixels and the weight values gradually decrease towards the center of the respective low-weight section. Further, the low-weight sections are cut apart in the middle and show a gap of 20 pixels between the two low-weight sub-sections. For image 55-1, the weighting value in the black sections is set to 0.01 whereas the weighting value in the white sections is set to 1. Similarly, for image 55-2, the weighting value in the black sections is set to 0.1, and for image 55-3 to 0.5 Again, the best improvement vs. the unweighted filtered image 53 is achieved with the weighting value 0.01 in image 55-1. But even image 55-3 still shows a significant denoising improvement vs. image 53. Remarkably, image 55-1 already comes quite close to the quality of the 2D filtered image 51.

In general, the lower the weight values are chosen in the low-weight sections of the weight functions, the higher is the quality of the resulting 3D image (weighted lower-dimensional filtered). Nevertheless, weight values up to 0.5 can still achieve improved results compared to an unweighted lower-dimensional filtered image.

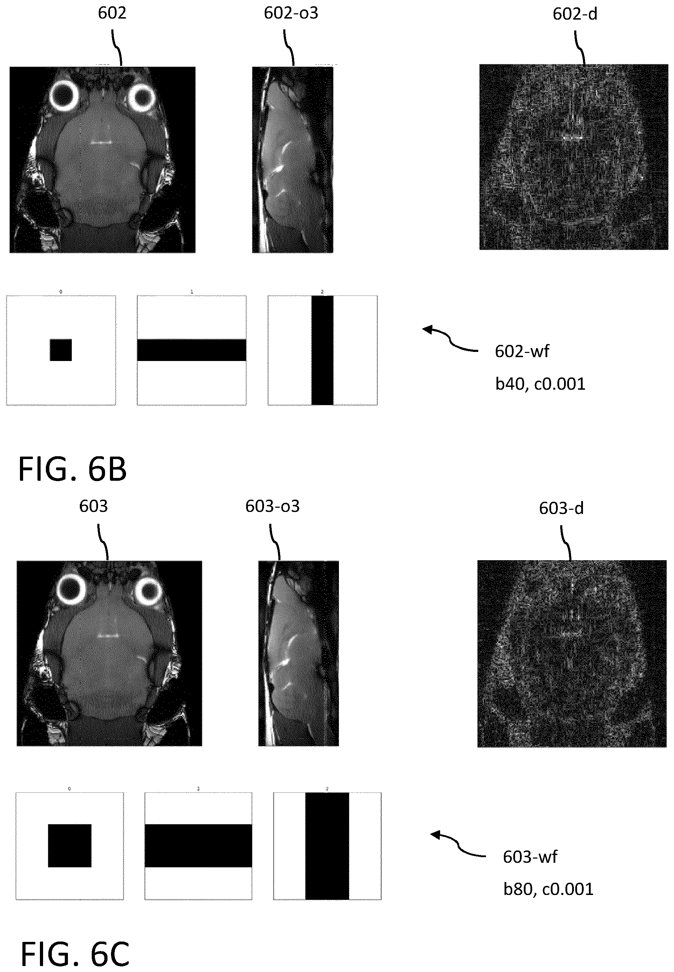

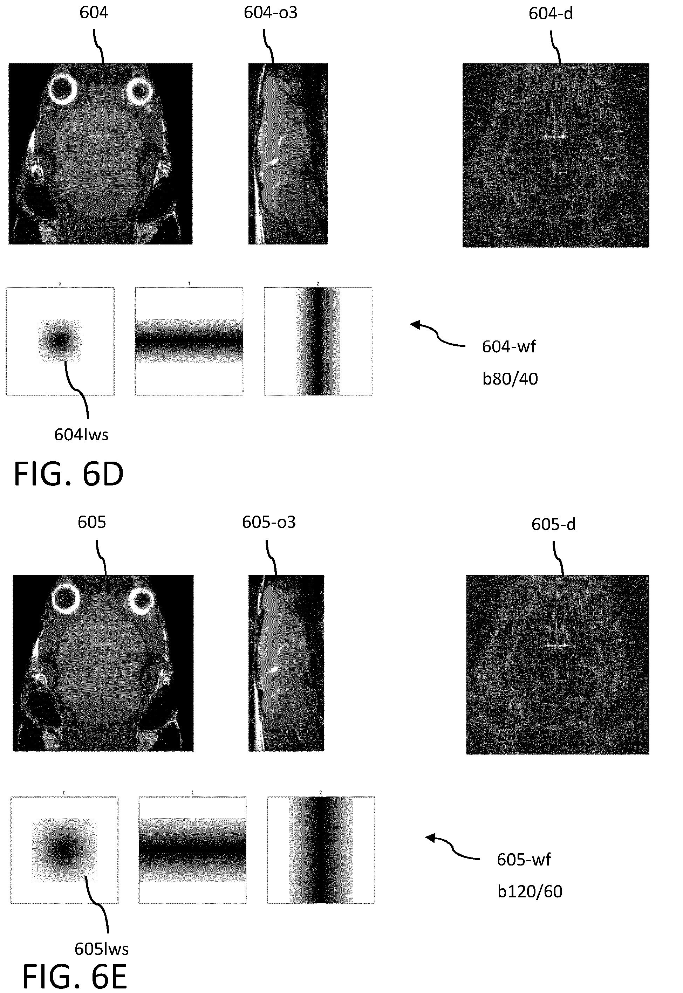

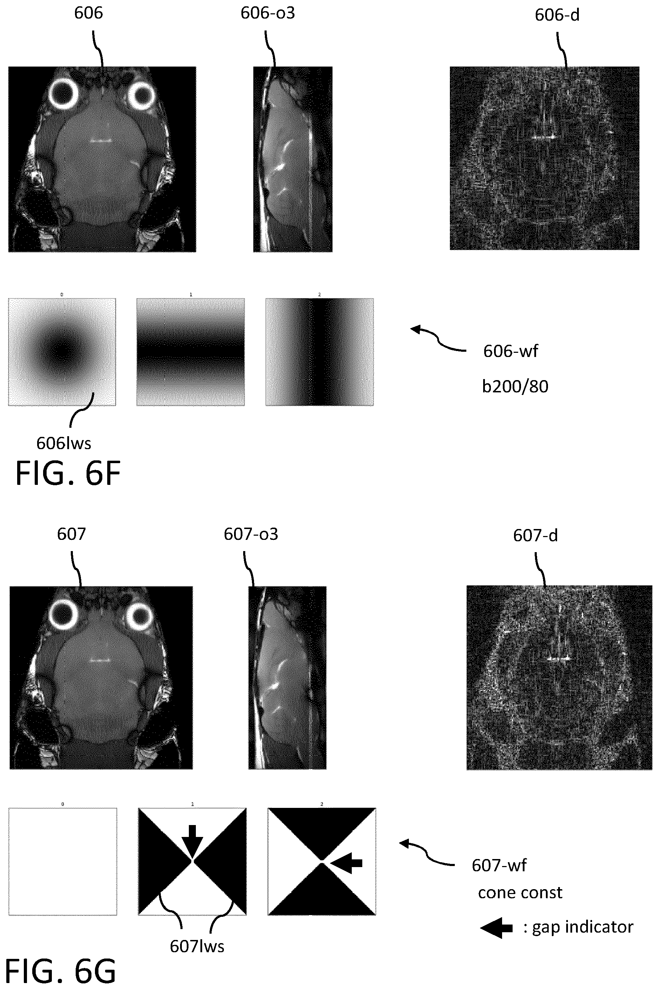

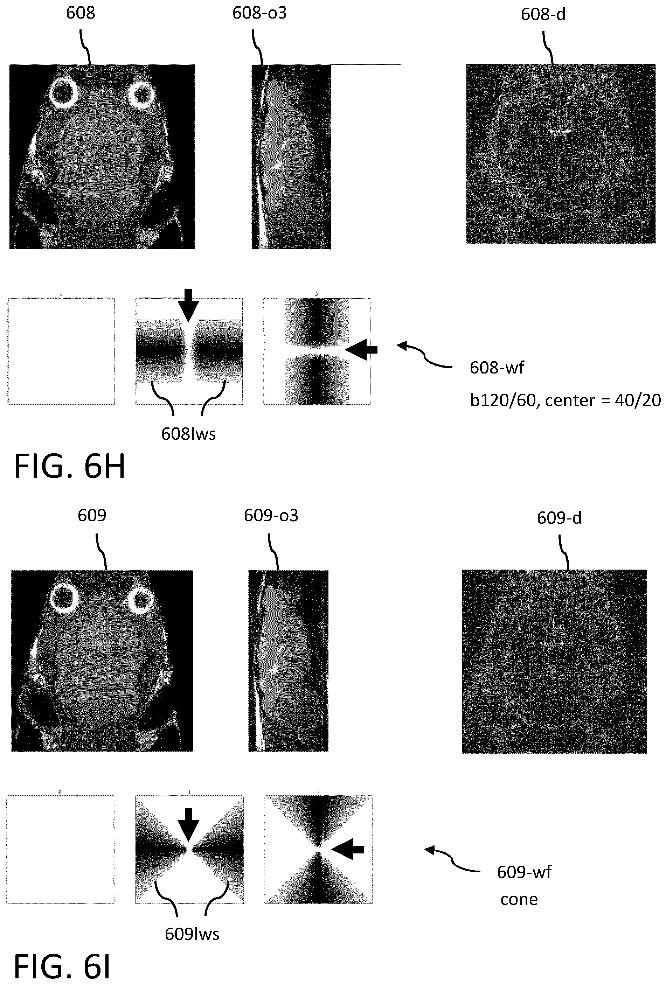

FIG. 6 shows a cross-section image 600 of a 3D image of the head of a mouse. The eyes of the mouse are clearly visible in the upper section of image 600. Image 600 is the result of a combination of three filtered objects where each filtered object was generated by a lower dimensional filtering process along another dimension of the underlying unfiltered 3D image object (as described in the context of FIG. 1). Cross-section image 600-o3 shows a cross-section orthogonal to cross-section image 600. Image 600-o3 has also been filtered along all three dimensions of the original 3D image (not shown). Cross-section image 600-o1 shows the same section of the mouse head, no filtering was applied along a respective dimension. Therefore, the stripe-like artefacts are much more visible than in image 600-o3 where filtering occurred in all three dimensions. Nevertheless, images 600 and 600-o3 still show artefacts which can be significantly reduced by applying appropriate weight functions to the corresponding transformed filtered objects.

FIGs. 6A to 6I illustrate denoising improvements for different pre-defined weight functions (i.e., weight functions not automatically generated based on transformed filtered objects). Each figure includes an image 60* (*:= 1 to 9) showing a cross-section of a weighted filtered image where weight functions 60*-wf have been applied to the respective transformed filtered objects. Thereby, the cross-sections images 60* correspond to the unweighted filtered image 600 of FIG. 6. Images 60*-o3 are weighted filtered cross-sections orthogonal to the respective cross-sections 60*. Images 60*-d are difference images illustrating the difference between image 600 and the respective image 60*. That is, such difference visualizes the improvement (denoising) over the unweighted filtered objects which is achieved by applying the respective weight functions 60*-wf.

FIGs. 6A, 6B, 6C use weight functions 601-wf, 602-wf and 603-wf which are all of a first type with a band (black sections) of a given width and a constant weight value defining the low-weight sections of the weight functions. The constant weight value c is 0.001 and the widths are: 601-wf: 10 pixels, 602-wf: 40 pixels and 603-wf: 80 pixels. The differences observed in images 602-d, 603-d are greater than in image 601-d which indicates that the weight function 601-wf provides the worst weighted filtering result for this weight function type.

FIGs. 6D, 6E, 6F show weight functions 604-wf, 605-wf, 606-wf of a second type. The low-weight sections 604lws, 605lws and 606lws have continuously decreasing weight values towards the center of the weight function (orthogonal to the direction of the respective missing dimension of the previously applied filter function). Thereby, the weight values show rotational symmetry along the respective missing dimension (as illustrated by the corresponding left weight functions of 604-wf, 605-wf, 606-wf). For the weight functions 604-wf, a total width of 80 pixels is used for defining the low-weight section where a circle with a radius of 20 pixels around the center in the direction of missing dimensions includes the lowest constant weight values. For the weight functions 605-wf, a total width of 120 pixels is used for the low-weight section where a circle with a radius of 30 pixels around the center in the respective missing dimensions includes the lowest constant weight values in the low-weight section. For the weight functions 606-wf, a total width of 200 pixels is used for the low-weight section (the entire width of the weight function) where a circle with a radius of 40 pixels around the center in the respective missing dimensions includes the lowest constant weight values in the low-weight section. Again, the implementation with the smaller width (b80) shows a smaller difference 604-d over the unweighted filtered image 600.

In general, the second type of weight functions is applicable to transformed filtered objects generated by Fourier transformation or cosine transformation where each transformed filtered object extends along one or more directions corresponding to the dimensions missing in the respective previously applied filter functions. The values of the corresponding weight functions then have a minimum along a direction R corresponding to a missing dimension in relation to values present transversely to the direction R. In the example, weight functions 604-wf, 605-wf, 606-wf have a rotational symmetry along the direction R and the minimum weight values are at the center axes of the respective low-weight cylindric sections.

FIGs. 6G, 6H, 6I show weight functions 607-wf, 608-wf, 609-wf of a third type. The low-weight sections 604lws, 605lws and 606lws show a gap in the middle (indicated by thick black arrows as gap indicators). Because of the gap, the weight functions have no low weight values between the respective parts of the low-weight sections. For this reason, the cross-sections of the left weight functions of 607-wf, 608-wf, 609-wf do not show any low-weight sections.

In the example of FIG. 6G, weight functions 607-wf have low-weight sections 607lws with two cone-shaped parts where the tips of the cones point towards the center of the weight function and, from there, extend to two opposite edges of the respective weight functions.

In this example, the weight values inside the low-weight section are constant (illustrated by the black filling).

In the example of FIG. 6I, a similarly cone-shaped weight functions 609-wf are used. However, the weight values inside the two parts of the low-weight section 609lws are not constant. Rather, they continuously decrease from the outer surface of the cones towards the center-axes of the cones.

In the example of FIG. 6H, the low-weight sections 608lws of the weight functions 608-wf have two parts which have a cylindrical shape with curved caps at the inner end of the respective cylinder. In the example, the 3D data object was a matrix of the size 200x200x80. Therefore, the applied weight function is not the same in all dimensions. The inner end is the end which points towards the center of the respective weight function. In the example, the cylinders have a radius of 60 pixels in the larger dimension and 30 in the smaller dimension where the weight values continuously decrease towards the center axes of the cylinder. The gaps between the two cylindric parts are 20 pixels in the smaller dimension and 40 pixels in the larger dimension.

From the weight functions of the third type, in the example, weight function 607-wf results in difference object 607-d showing the greatest difference over image 600. That is, weight function 607-wf appears to provide the best weighted filtering result of the three examples with weight functions of the third type.

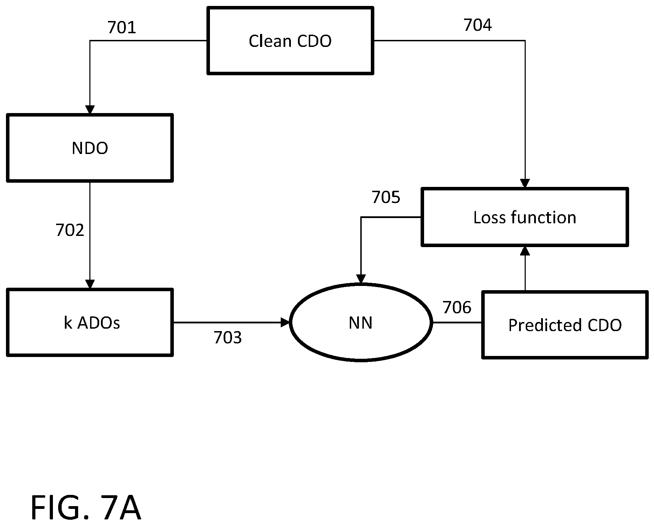

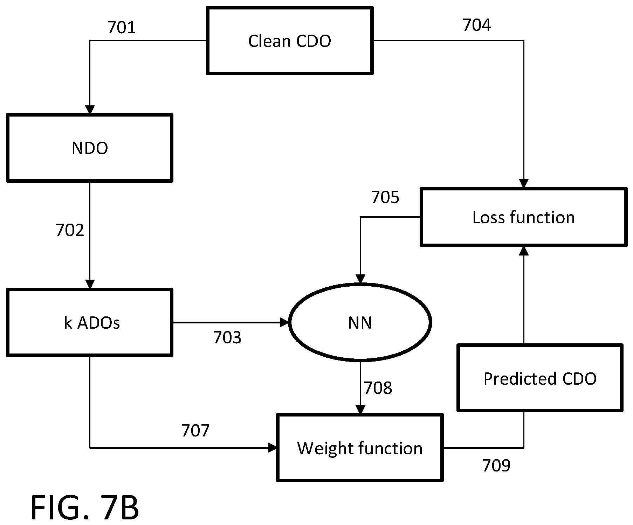

FIGs. 7A, 7B illustrate example embodiments where weight functions may be represented (FIG. 7A) or generated (FIG. 7B) by a neural network NN which has been trained by providing 704 n-dimensional clean data objects CDO as output data (training reference or ground truth) and generating n-dimensional data objects as input data from the output data by simulating 701 the artefacts to be removed by the filtering, and then filtering 702 them with the k filter functions. In other words, there are n-dimensional clean data objects CDO without artefacts and noise, and a set of k dF (lower)-dimensional filters designed to remove such noise, e.g., Gaussian noise. These CDO objects are used as output data. Noise data objects NDO are generated by adding noise to the CDO objects. These NDO objects are filtered 702 by the set of filters, generating k ADO objects (filtered data objects with residual artefacts resulting from the lower dimensionality of the filters compared to the NDO). In the implementation of FIG. 7A, the neural network NN is trained 703 with the ADO objects as an input and the CDO objects as an output wherein training feedback 705 is provided by a loss function which is determined by using the clean CDO objects and predicted CDO objects (predicted 706 by the neural network NN). The weight functions are then represented by the trained neural network NN. Alternatively, in FIG. 7B, the neural network NN is trained 703 with the transformed ADO objects as an input and the transformed clean CDO objects as an output (ground truth). The neural network may be trained to provide 708 a n-dimensional weighting function with the transformed input data objects as an input 707 and output data objects as predicted CDOs (by applying 709 the weight function to the respective ADOs). In this alternative implementation, weight functions are generated 708 by the neural network NN.

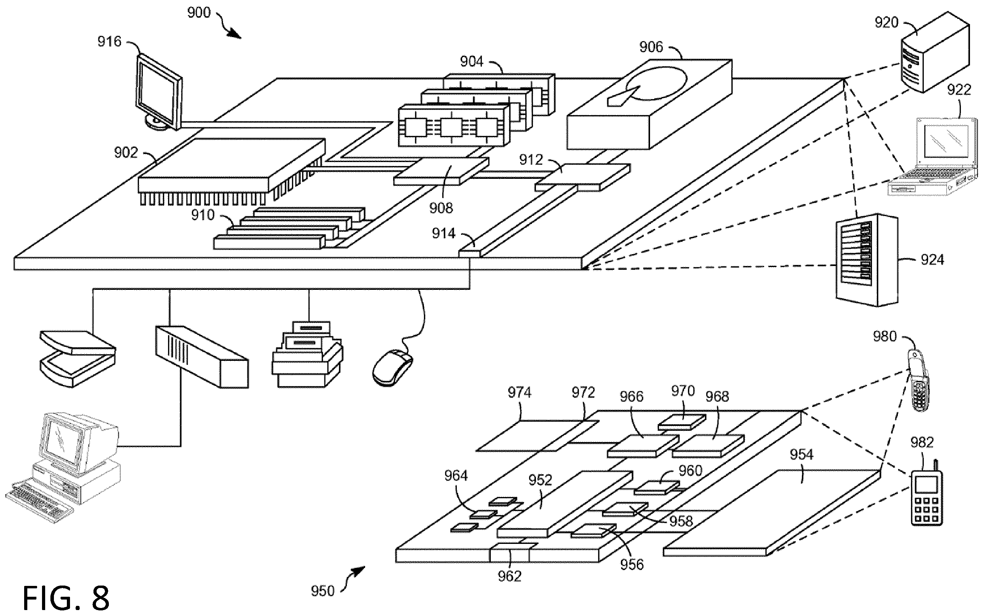

FIG. 8 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Advantageously, device 900 has a GPU adapted to process machine learning algorithms. Generic computer device 900 may correspond to the computer system 100 of FIG. 1. Computing device 950 is intended to represent various forms of mobile devices, such as personal digital assistants, cellular telephones, smart phones, and other similar computing devices. For example, computing device 950 may be used as a GUI frontend for a user to visualize the weight-filtered n-dimensional objects for the user. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processing units and/or multiple buses may be used, as appropriate, along with multiple memories and types of memory. Also, multiple computing devices 900 may be connected, with each device providing portions of the necessary operations (e.g., as a server bank, a group of blade servers, or a processing device).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processing units. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the scope of the claims.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. A computer-implemented method (1000) for processing an n-dimensional data object (202) of a metrological investigation, comprising the steps of:

    a) receiving (1100) the n-dimensional data object (202) from a data source (200) providing the n-dimensional data object as measurement result of the metrological investigation;
    b) calculating (1200) a plurality of k filtered objects (FO1 to FO3) by filtering the n-dimensional data object with k filter functions (F1 to F3), wherein each filter function has a dimension dF with dF< n, and each filter function, in the space of the data object, is missing at least one of the n dimensions (x, y, z) of the data object (202) such that none of the n dimensions of the data object is missing in all filter functions;
    c) transforming (1300) the k filtered objects (FO1 to FO3) by an invertible integral transformation (130) into k transformed filtered objects (TFO1 to TFO3);
    d) point-wise weighting (1400) of each of the k transformed filtered objects (TFO1 to TFO3) with a respective weight function (WF1 to WF3) to reduce artefacts from the calculating step b) resulting in k weighted transformed filtered objects (WTFO1 to WTFO3);
    e) combining (1500) the k weighted transformed filtered objects (WTFO1 to WTFO3) into a combined transformed filtered object (CTFO) wherein each data point of the combined transformed filtered object is normalized with the sum of the respective weight functions at the respective data point; and
    f) transforming (1600) the combined filtered object (CTFO), by applying the inverse (160) of the invertible integral transformation, into a weighted-filtered n-dimensional data object (202wf).

2. The method of claim 1, wherein each weight function is determined (1380) from the transformed filtered objects comprising the steps of:

    i) creating (1381) k-1 difference objects by forming the differences between a particular transformed filtered object and the remaining k-1 transformed filtered objects;
    ii) smoothing (1382) the difference objects;
    iii) threshold filtering (1383) of the smoothed k-1 difference objects by replacing negative values by 0;
    iv) combining (1384) the filtered k-1 difference objects by a point-wise maximum value formation into a combined difference object; and
    v) pointwise inverting (1385) the combined difference object.

3. The method of claim 2, wherein a morphological operation is applied to the data points of the difference objects created in step (i).

4. The method of any of the previous claims, wherein k = n-1 and dF = n-1.

5. The method of any of the previous claims, wherein each weight function only has values smaller than or equal to 1 and greater than 0.

**6.** The method of any of the previous claims, wherein each weight function has only two values greater than 0.

**7.** The method of any of the previous claims, wherein a particular dimension of the data object is selected from: a spatial direction, the time, a diffusion direction, a dimension representing multiple data receivers, and a spectroscopic dimension.

**8.** The method of any of the previous claims, wherein the data object originates from magnetic resonance imaging, magnetic resonance spectroscopy, computed tomography, positron emission tomography or optical imaging.

**9.** The method of any of the previous claims, wherein the filtering of the data object comprises denoising.

**10.** The method of any of the previous claims, wherein the invertible integral transformation is a Fourier transform, a wavelet transform or a cosine transform.

**11.** The method of any of the previous claims, wherein the weight functions are represented by a neural network which has been trained by providing n-dimensional data objects as output data and generating n-dimensional data objects as input data from the output data by simulating the artefacts to be removed by the filtering, and then filtering them with the k filter functions.

**12.** The method of any of the previous claims, wherein the filter functions are n-1-dimensional, wherein the invertible integral transformation is a Fourier transform or a cosine transform and the weight functions applied to the transformed filtered objects each extend along the direction corresponding to the dimension missing in the previously applied filter functions, and each weight function having a minimum along a direction R corresponding to a missing dimension in relation to values present transversely to the direction R.

**13.** The method of claim 12, wherein the invertible integral transformation is a Fourier transform and each weight function has a rotational symmetry along the direction R.

**14.** A computer program product for processing an n-dimensional data object (202) of a metrological investigation, the program, when loaded into a memory of a computing device and executed by at least one processor of the computing device, causes the at least one processor to execute the steps of the computer-implemented method according to of any one of the previous claims.

**15.** A computer system (100) adapted for processing an n-dimensional data object (202) of a metrological investigation, comprising functional modules (110 to 160) adapted to execute the method steps according to any of the claims 1 to 13.

**Patentansprüche**

**1.** Computerimplementiertes Verfahren (1000) zur Verarbeitung eines n-dimensionalen Datenobjekts (202) einer messtechnischen Untersuchung, die folgenden Schritte umfassend:

a) Empfangen (1100) des n-dimensionalen Datenobjekts (202) von einer Datenquelle (200), die das n-dimensionale Datenobjekt als Messergebnis der messtechnischen Untersuchung bereitstellt;

b) Berechnen (1200) einer Vielzahl von k gefilterten Objekten (FO1 bis FO3) durch Filtern des n-dimensionalen Datenobjekts mit k Filterfunktionen (F1 bis F3), wobei jede Filterfunktion eine Dimension dF mit dF< n hat und jede Filterfunktion im Raum des Datenobjekts mindestens eine der n Dimensionen (x, y, z) des Datenobjekts (202) fehlt, so dass in allen Filterfunktionen keine der n Dimensionen des Datenobjekts fehlt;

c) Transformieren (1300) der k gefilterten Objekte (FO1 bis FO3) durch eine invertierbare integrale Transformation (130) in k transformierte gefilterte Objekte (TFO1 bis TFO3);

d) punktweises Gewichten (1400) jedes der k transformierten gefilterten Objekte (TFO1 bis TFO3) mit einer jeweiligen Gewichtungsfunktion (WF1 bis WF3), um Artefakte aus dem Berechnungsschritt b) zu reduzieren, was zu k gewichteten transformierten gefilterten Objekten (WTFO1 bis WTFO3) führt;

e) Kombinieren (1500) der k gewichteten transformierten gefilterten Objekte (WTFO1 bis WTFO3) zu einem kombinierten transformierten gefilterten Objekt (CTFO), wobei jeder Datenpunkt des kombinierten transformierten gefilterten Objekts mit der Summe der jeweiligen Gewichtungsfunktionen am jeweiligen Datenpunkt normalisiert wird; und

f) Transformieren (1600) des kombinierten gefilterten Objekts (CTFO) durch Anwenden der Umkehrung (160) der invertierbaren integralen Transformation in ein gewichtetes gefiltertes n-dimensionales Datenobjekt (202wf).

**2.** Verfahren nach Anspruch 1, wobei jede Gewichtungsfunktion aus den transformierten gefilterten Objekten bestimmt wird (1380), umfassend die folgenden Schritte:

i) Erzeugen (1381) von k-1 Differenzobjekten durch Bilden der Differenzen zwischen einem bestimmten transformierten gefilterten Objekt und den verbleibenden k-1 transformierten gefilterten Objekten;

ii) Glätten (1382) der Differenzobjekte;

iii) Schwellenwertfilterung (1383) der geglätteten k-1 Differenzobjekte durch Ersetzen negativer Werte durch 0;

iv) Kombinieren (1384) der gefilterten k-1 Differenzobjekte durch eine punktweise Maximalwertbildung zu einem kombinierten Differenzobjekt; und

v) punktweise Invertierung (1385) des kombinierten Differenzobjekts.

3. Verfahren nach Anspruch 2, wobei eine morphologische Operation auf die Datenpunkte der in Schritt (i) erzeugten Differenzobjekte angewendet wird.

4. Verfahren nach einem der vorhergehenden Ansprüche, wobei k = n-1 und dF = n-1 ist.

5. Verfahren nach einem der vorhergehenden Ansprüche, wobei jede Gewichtungsfunktion nur Werte kleiner oder gleich 1 und größer als 0 hat.

6. Verfahren nach einem der vorhergehenden Ansprüche, wobei jede Gewichtungsfunktion nur zwei Werte größer als 0 aufweist.

7. Verfahren nach einem der vorhergehenden Ansprüche, wobei eine bestimmte Dimension des Datenobjekts aus folgenden ausgewählt wird: einer räumlichen Richtung, der Zeit, einer Diffusionsrichtung, einer Dimension, die mehrere Datenempfänger darstellt, und einer spektroskopischen Dimension.

8. Verfahren nach einem der vorhergehenden Ansprüche, wobei das Datenobjekt aus der Magnetresonanztomographie, der Magnetresonanzspektroskopie, der Computertomographie, der Positronen-Emissions-Tomographie oder der optischen Bildgebung stammt.

9. Verfahren nach einem der vorhergehenden Ansprüche, wobei das Filtern des Datenobjekts eine Rauschunterdrückung umfasst.

10. Verfahren nach einem der vorhergehenden Ansprüche, wobei die invertierbare integrale Transformation eine Fourier-Transformation, eine Wavelet-Transformation oder eine KosinusTransformation ist.

11. Verfahren nach einem der vorhergehenden Ansprüche, wobei die Gewichtungsfunktionen durch ein neuronales Netzwerk dargestellt werden, das trainiert wurde, indem n-dimensionale Datenobjekte als Ausgabedaten bereitgestellt und n-dimensionale Datenobjekte als Eingabedaten aus den Ausgabedaten generiert wurden, indem die durch die Filterung zu entfernenden Artefakte simuliert und dann mit den k Filterfunktionen gefiltert wurden.

12. Verfahren nach einem der vorhergehenden Ansprüche, wobei die Filterfunktionen n-1-dimensional sind, wobei die invertierbare Integraltransformation eine Fourier-Transformation oder eine Kosinustransformation ist und die auf die transformierten gefilterten Objekte angewendeten Gewichtungsfunktionen sich jeweils entlang der Richtung erstrecken, die der in den zuvor angewendeten Filterfunktionen fehlenden Dimension entspricht, und wobei jede Gewichtungsfunktion ein Minimum entlang einer Richtung R aufweist, die einer fehlenden Dimension in Bezug auf Werte entspricht, die quer zur Richtung R vorhanden sind.

13. Verfahren nach Anspruch 12, wobei die invertierbare Integraltransformation eine Fourier-Transformation ist und jede Gewichtungsfunktion eine Rotationssymmetrie entlang der Richtung R aufweist.

14. Ein Computerprogrammprodukt zur Verarbeitung eines n-dimensionalen Datenobjekts (202) einer messtechnischen Untersuchung, wobei das Programm, wenn es in einen Speicher einer Rechenvorrichtung geladen und von mindestens einem Prozessor der Rechenvorrichtung ausgeführt wird, den mindestens einen Prozessor veranlasst, die Schritte des computerimplementierten Verfahrens gemäß einem der vorhergehenden Ansprüche auszuführen.

15. Computersystem (100), das zur Verarbeitung eines n-dimensionalen Datenobjekts (202) einer messtechnischen Untersuchung ausgelegt ist, mit Funktionsmodulen (110 bis 160), die zur Ausführung der Verfahrensschritte gemäß einem der Ansprüche 1 bis 13 ausgelegt sind.

## Revendications

1. Procédé mis en œuvre par ordinateur (1000) pour traiter un objet de données à n dimensions (202) d'une enquête métrologique, comprenant les étapes suivantes :

a) recevoir (1100) l'objet de données à n dimensions (202) provenant d'une source de données (200) fournissant l'objet de données à n dimensions en tant que résultat de mesure de l'enquête métrologique ;

b) calculer (1200) une pluralité de k objets filtrés (FO1 à FO3) en filtrant l'objet de données à n dimensions avec k fonctions de filtrage (F1 à F3), dans lequel chaque fonction de filtrage a une dimension dF avec dF < n, et chaque fonction de filtrage, dans l'espace de l'objet de données, manque au moins une des n dimensions (x, y, z) de l'objet de données (202) de telle sorte qu'aucune des n dimensions de l'objet de données ne manque dans toutes les fonctions de filtrage ;

c) transformer (1300) les k objets filtrés (FO1 à FO3) par une transformation intégrale inversible (130) en k objets filtrés transformés (TFO1 à TFO3) ;

d) pondérer ponctuellement (1400) chacun des k objets filtrés transformés (TFO1 à TFO3) avec une fonction de pondération respective (WF1 à WF3) afin de réduire les artefacts résultant de l'étape de calcul b), ce qui donne k objets filtrés transformés pondérés (WTFO1 à WTFO3) ;

e) combiner (1500) les k objets filtrés transformés pondérés (WTFO1 à WTFO3) en un objet filtré transformé combiné (CTFO) dans lequel chaque point de données de l'objet filtré transformé combiné est normalisé avec la somme des fonctions de pondération respectives au point de données respectif ; et

f) transformer (1600) l'objet filtré combiné (CTFO), en appliquant l'inverse (160) de la transformation intégrale inversible, en un objet de données n-dimensionnel filtré pondéré (202wf).

2. Procédé selon la revendication 1, dans lequel chaque fonction de pondération est déterminée (1380) à partir des objets filtrés transformés, comprenant les étapes suivantes :

i) créer (1381) k-1 objets de différence en formant les différences entre un objet filtré transformé particulier et les k-1 objets filtrés transformés restants ;
ii) lisser (1382) les objets de différence ;
iii) filtrer par seuil (1383) les k-1 objets de différence lissés en remplaçant les valeurs négatives par 0 ;
iv) combiner (1384) les k-1 objets de différence filtrés par formation d'une valeur maximale ponctuelle en un objet de différence combiné ; et
v) inverser ponctuellement (1385) l'objet de différence combiné.

3. Procédé selon la revendication 2, dans lequel une opération morphologique est appliquée aux points de données des objets de différence créés à l'étape (i).

4. Procédé selon l'une quelconque des revendications précédentes, dans lequel k = n-1 et dF = n-1.

5. Procédé selon l'une quelconque des revendications précédentes, dans lequel chaque fonction de pondération n'a que des valeurs inférieures ou égales à 1 et supérieures à 0.

6. Procédé selon l'une quelconque des revendications précédentes, dans lequel chaque fonction de pondération n'a que deux valeurs supérieures à 0.

7. Procédé selon l'une quelconque des revendications précédentes, dans lequel une dimension particulière de l'objet de données est sélectionnée parmi : une direction spatiale, le temps, une direction de diffusion, une dimension représentant plusieurs récepteurs de données et une dimension spectroscopique.

8. Procédé selon l'une quelconque des revendications précédentes, dans lequel l'objet de données provient de l'imagerie par résonance magnétique, de la spectroscopie par résonance magnétique, de la tomographie par ordinateur, de la tomographie par émission de positons ou de l'imagerie optique.

9. Procédé selon l'une quelconque des revendications précédentes, dans lequel le filtrage de l'objet de données comprend le débruitage.

10. Procédé selon l'une quelconque des revendications précédentes, dans lequel la transformation intégrale inversible est une transformée de Fourier, une transformée en ondelettes ou une transformée cosinus.

11. Procédé selon l'une quelconque des revendications précédentes, dans lequel les fonctions de pondération sont représentées par un réseau neuronal qui a été entraîné en fournissant des objets de données à n dimensions comme données de sortie et en générant des objets de données à n dimensions comme données d'entrée à partir des données de sortie en simulant les artefacts à supprimer par le filtrage, puis en les filtrant avec les k fonctions de filtrage.

12. Procédé selon l'une quelconque des revendications précédentes, dans lequel les fonctions de filtrage sont à n-1 dimensions, dans lequel la transformation intégrale inversible est une transformée de Fourier ou une transformée cosinus et les fonctions de pondération appliquées aux objets filtrés transformés s'étendent chacune dans la direction correspondant à la dimension manquante dans les fonctions de filtrage précédemment appliquées, et chaque fonction de pondération ayant un minimum dans une direction R correspondant à une dimension manquante par rapport aux valeurs présentes transversalement à la direction R.

13. Procédé selon la revendication 12, dans lequel la transformation intégrale inversible est une transformée de Fourier et chaque fonction de pondération présente une symétrie de rotation le long de la direction R.

14. Produit logiciel destiné à traiter un objet de données à n dimensions (202) d'une étude métrologique, le programme, lorsqu'il est chargé dans une mémoire d'un dispositif informatique et exécuté par au moins un processeur du dispositif informatique, amenant le au moins un processeur à exécuter les étapes du procédé mis en œuvre par ordinateur selon l'une quelconque des revendications précédentes.

15. Système informatique (100) adapté pour traiter un objet de données à n dimensions (202) d'une enquête métrologique, comprenant des modules fonctionnels (110 à 160) adaptés pour exécuter les étapes du procédé selon l'une quelconque des revendications 1 à 13.

FIG. 1

1000

| receiving n-dimensional data object obtained by a metrological investigation | 1100 |

| calculating k filter objects by filtering data object with k filter functions | 1200 |

| transforming the k filtered objects by an invertible integral transformation | 1300 |

| determining weight functions from transformed filtered objects | 1380 |

| point-wise weighting of the k transformed filtered objects with respective k weight functions reducing artefacts | 1400 |

| combining the k weighted transformed filtered objects wherein each data point of the combined transformed filter object is normalized with the sum of the respective weight functions at each point of the data object | 1500 |

| transforming combined filtered object by applying the inverse of the invertible integral transformation | 1600 |

# FIG. 2

1380

creating difference objects as the differences between a
particular transformed filter object and the remaining
transformed filter objects — 1381

smoothing the difference objects — 1382

threshold filtering of the difference objects — 1383

combining filtered difference objects by point-wise maximum
value formation — 1384

inverting combined difference object — 1385

# FIG. 3

411x

411

ky

kx

412

412y

FIG. 4A

FIG. 4B

420

502

551

552

561

562

571

572

580

590

ky

kx

FIG. 5A

501

510

520

530

540

FIG. 5B

FIG. 5C

FIG. 6

FIG. 6A

602       602-o3       602-d

602-wf

b40, c0.001

## FIG. 6B

603       603-o3       603-d

603-wf

b80, c0.001

## FIG. 6C

604

604-o3

604-d

604-wf
b80/40

604lws

## FIG. 6D

605

605-o3

605-d

605-wf
b120/60

605lws

## FIG. 6E

606       606-o3       606-d

606-wf

b200/80

606lws

## FIG. 6F

607       607-o3       607-d

607-wf

cone const

◄— : gap indicator

607lws

## FIG. 6G

608    608-o3    608-d

608-wf

b120/60, center = 40/20

608lws

## FIG. 6H

609    609-o3    609-d

609-wf

cone

609lws

## FIG. 6I

701 ─── Clean CDO ─── 704

NDO

702

k ADOs ── 703 ──→ NN

705 ── Loss function

706 ── Predicted CDO

## FIG. 7A

701 → Clean CDO → 704

NDO

702

k ADOs → 703 → NN

705 → Loss function

Predicted CDO

708

707 → Weight function → 709

FIG. 7B

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5473655 A

**Non-patent literature cited in the description**

- **TIMOFTE et al.** Seven ways to improve example-based single image super resolution. *arXiv:1511.02228v1*, 2015
- **MULLER et al.** *Dose reduction and image enhancement in micro-CT using deep learning*, 2023
- **JEAN SERRA**. *Image Analysis and Mathematical Morphology*, 1982, ISBN 0-12-637240-3
- **JEAN SERRA**. Image Analysis and Mathematical Morphology. *Theoretical Advances*, 1988, vol. 2, ISBN 0-12-637241-1